# FASCICULE DE BREVET EUROPEEN

(11) **EP 2 096 821 B1**
(45) Date de publication et mention de la délivrance du brevet: **08.04.2015**
(21) Numéro de dépôt: 09152827.3
(22) Date de dépôt: 13.02.2009
(51) Int. Cl.: H04N 21/41, H04N 21/432, H04N 21/6547, H04L 29/06, H04N 21/658, H04N 21/6587, H04N 21/81, H04N 21/8352

(54) **Procédé de restitution de contenu sur un terminal domestique et terminal domestique associé**
Wiederherstellungsverfahren von Daten auf einem Heimendgerät und entsprechendes Heimendgerät
Method for the restoral of content on a home terminal and associated home terminal

(30) Priorité: 26.02.2008 FR 0851194
(43) Date de publication de la demande: 02.09.2009
(73) Titulaire: Orange, 75015 Paris (FR)
(72) Inventeur: de La Forest Divonne, Aymeric, 14000, CAEN (FR); Gue, Emmanuel, 14790, VERSON (FR)

(56) Documents cités:
- US-A1- 2005 273 399
- US-A1- 2007 124 796

## Description

### Arrière-plan de l'invention

Le domaine de l'invention se rapporte au domaine de la radiodiffusion de contenu dans un réseau domestique.

On connaît déjà des terminaux domestiques adaptés à recevoir des contenus au format IP, par exemple de type audio, en provenance d'un serveur distant installé dans un réseau de communication de type Internet. A cet effet, un terminal du type précité est connecté à une passerelle domestique via une liaison radio (par exemple Wi-Fi ou Bluetooth), ladite passerelle étant adaptée à recevoir des contenus audio, via le réseau de type Internet, puis à les transmettre, au format IP, au terminal, via la liaison radio précitée.

US 2007/0124796 et US 2005/0273399 concernent la restitution, sur des terminaux domestiques, de contenus préalablement sélectionnés sur un serveur distant.

Actuellement, les terminaux domestiques du type précité ne sont pas adaptés pour restituer un ou plusieurs contenus sélectionnés par l'utilisateur, à un instant préalablement choisi par ce dernier.

### Objet et résumé de l'invention

A cet effet, la présente invention concerne un procédé de restitution de contenu sur un terminal domestique, tel que défini dans la revendication 1.

Corrélativement, l'invention concerne un terminal domestique tel que défini dans la revendication 5.

Une telle disposition permet ainsi à l'utilisateur du terminal domestique de consulter le contenu qu'il souhaite à l'instant où il le souhaite.

Dans un mode particulier de réalisation, l'étape de sélection précitée comprend le choix de l'instant prédéterminé.

Une telle disposition permet avantageusement à l'utilisateur du terminal d'associer le contenu qu'il a choisi à l'instant auquel il souhaite restituer ce contenu.

Dans un mode particulier de réalisation, l'étape de sélection précitée comprend la détermination d'un mode de restitution du contenu sélectionné.

Une telle disposition évite ainsi à tout utilisateur malhonnête de requérir à nouveau, sans aucun frais, la restitution du même contenu.

L'invention concerne également une plateforme telle que définie dans la revendication 7.

L'invention vise également un programme d'ordinateur sur un support d'informations, ce programme étant susceptible d'être mis en oeuvre en partie dans un terminal domestique et en partie dans un serveur de contenus, ce programme comportant des instructions adaptées à la mise en oeuvre des étapes d'un procédé de restitution tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est Incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une représentation de l'architecture générale dans laquelle est mis en oeuvre le procédé de restitution de contenu selon l'invention;
- la figure 2 représente un ordinogramme d'un procédé de restitution de contenus conforme à l'invention;
- la figure 3 représente la structure du message contenant l'identifiant généré qui est associé au contenu destiné à être restitué conformément à l'invention.

### Description détaillée d'un mode de réalisation

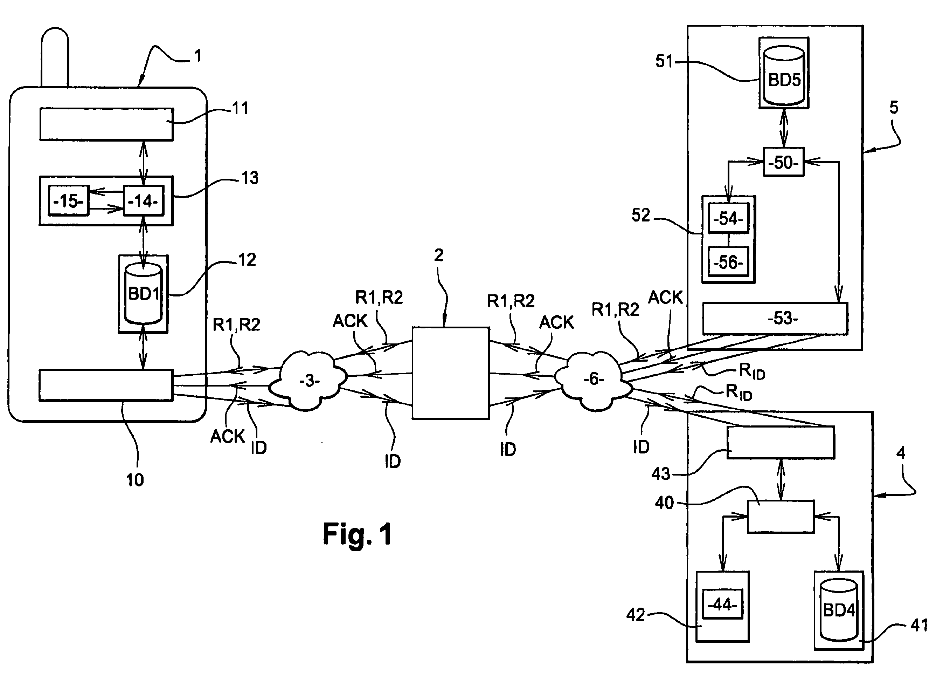

La **figure 1** représente de façon générale le système de restitution de contenu dans lequel est mis en oeuvre le procédé de restitution selon l'invention.

Le système précité comprend:
- un terminal domestique 1 adapté à recevoir des contenus au format IP, de préférence sous la forme de flux audio,
- une passerelle domestique 2 apte à transmettre lesdits contenus au terminal domestique,
- un réseau domestique 3 dans lequel sont connectés le terminal 1 et la passerelle 2, par exemple de type WiFi,
- un serveur distant SERV 4 dans lequel sont stockés les contenus audio destinés à être restitués sur le terminal 1,
- une plateforme de service PT 5 apte à authentifier l'utilisateur du terminal 1 et à stocker un catalogue de contenus audio destinés à être sélectionnés par ledit utilisateur,
- un réseau de communication de type Internet 6 dans lequel sont connectés d'une part, la passerelle domestique 2, et, d'autre part, le serveur 4 et la plateforme de service 5.

Plus particulièrement dans l'exemple représenté, la plateforme 5, a, de façon connue en soi, l'architecture matérielle d'un ordinateur et comprend de ce fait un processeur 50, une mémoire vive 51 et une mémoire morte 52.

La plateforme 5 comporte en particulier :
- des moyens 53 de communication avec la passerelle 2 ou le serveur 4, tels que par exemple une interface de type Internet,
- des moyens 54 d'authentification de l'utilisateur, tels qu'un logiciel d'authentification cryptographique classique, qui sont stockés dans la mémoire morte 52,
- des moyens 55 de mémorisation d'un catalogue de contenus audio du type précité, tels qu'une base de données BD5, qui sont contenus dans la mémoire vive 51,
- un module applicatif 56, stocké dans la mémoire morte 52, qui est apte à être lancé dès authentification réussie de l'utilisateur, afin de générer un identifiant associé au ou aux contenus audio sélectionnés par l'utilisateur.

Plus particulièrement dans l'exemple représenté, le serveur 4 est un serveur de streaming, c'est-à-dire qu'il est destiné à diffuser le ou les contenus audio sélectionnés par l'utilisateur sous la forme de flux audio, à destination du terminal domestique 1. Le serveur 4 a, de façon connue en soi, l'architecture matérielle d'un ordinateur et comprend de ce fait un processeur 40, une mémoire vive 41 et une mémoire morte 42.

Un tel serveur 4 comporte en particulier :
- des moyens 43 de communication avec la passerelle 2 ou la plateforme de service 5, tels que par exemple une interface de type Internet,
- des moyens de temporisation 44, tels qu'une horloge, qui sont stockés dans la mémoire morte 42 et qui sont aptes à mesurer la durée au bout de laquelle cesse la transmission du ou des contenus audio sélectionnés par l'utilisateur, dans le cas où ce dernier a requis la restitution de ces contenus en boucle,
- une base de données BD4, contenue dans la mémoire vive 41 et apte à stocker physiquement les contenus audio figurant au catalogue contenu dans la base de données BD5 de la plateforme 5.

Toujours en référence à la figure 1, le terminal domestique 1 est de préférence de type audio. Il s'agit par exemple d'un téléphone WiFi-SIP (de l'anglais Session Initiation Protocol), d'un médiaphone, d'un terminal pourvu d'un écran de plusieurs pouces de type cadre photo communiquant, etc.....

Toujours en référence à la figure 1, le terminal 1 comprend, de façon connue en soi :
- des moyens de sélection 10, tel qu'un navigateur web, pour communiquer avec la plateforme de service 5, via la passerelle 2, afin de sélectionner un ou plusieurs contenus audio dans un catalogue stocké dans ladite plateforme 5: de tels contenus audio sont par exemple la météo, les informations nationales, les derniers hits, des chroniques économiques, etc...,
- une interface utilisateur 11 comprenant classiquement un clavier, un écran et un haut parleur,
- une mémoire vive 12 dans laquelle est stockée une base de données BD1 contenant les identifiants associés au ou aux contenus sélectionnés par l'utilisateur, ainsi que la description correspondante du ou de ces contenus,
- une mémoire morte 13 dans laquelle sont stockés :
   - un module applicatif 14 destiné d'une part, à extraire de la base de données BD1 les identifiants en association avec la description de leur(s) contenu(s) audio correspondant(s), et, d'autre part, à les transmettre à l'interface utilisateur 11, de façon à les afficher sur l'écran du terminal domestique 1;
   - des moyens de temporisation 15, tels qu'une horloge, qui sont aptes à mesurer une durée déterminée préalablement par l'utilisateur du téléphone 1, au bout de laquelle ce dernier déclenche l'envoi, en direction du serveur de streaming 4, d'un message contenant l'identifiant associé au ou aux contenus que l'utilisateur souhaite écouter sur son téléphone 1.

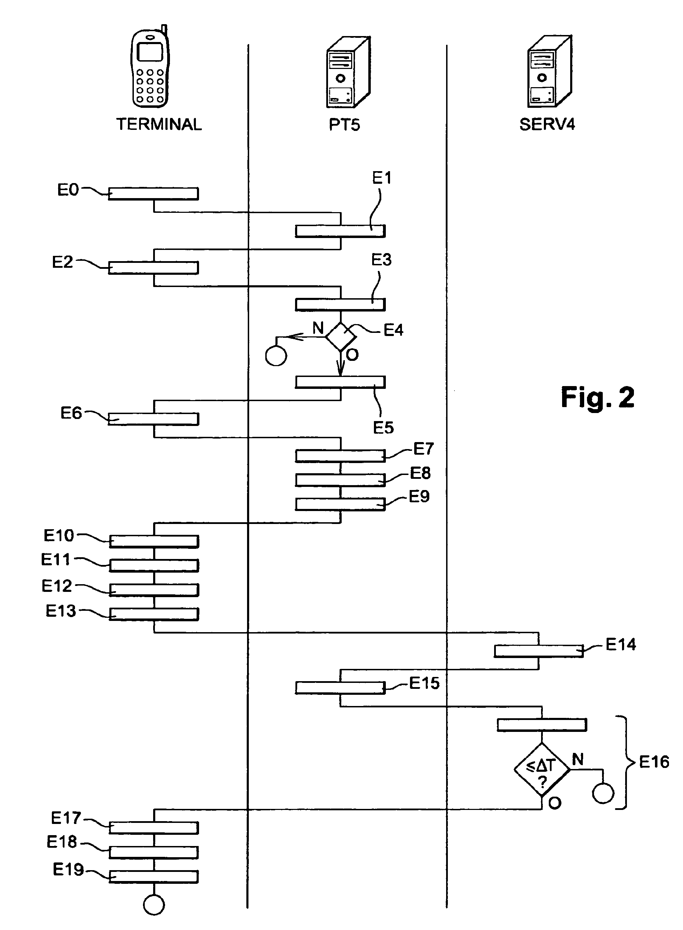

En référence maintenant aux **figures 1** **et** **2**, on va décrire les principales étapes du procédé de restitution de contenus audio conforme à l'invention.

Au cours d'une étape E0, l'utilisateur du terminal domestique 1 se connecte à la plateforme 5, via la passerelle domestique 2, au moyen de son navigateur Web 10.

Au cours d'une étape E1, l'interface Internet 53 de la plateforme 5 envoie en réponse à l'utilisateur du terminal 1 une requête d'authentification R1 qui s'affiche à l'écran du terminal 1 et qui est du type: "saisissez votre mot de passe".

Au cours d'une étape E2, l'utilisateur saisit son mot de passe sur le clavier de son terminal 1 puis le transmet à la plateforme 5, en réponse à la requête R1.

Au cours d'une étape E3, l'interface Internet 53 transmet le mot de passe reçu au logiciel d'authentification cryptographique 54 qui vérifie, au cours d'une étape E4, que l'utilisateur du terminal domestique 1 est bien abonné au service de restitution de contenus audio.

Au cours d'une étape E5, l'interface Internet 53 de la plateforme 5 envoie à l'utilisateur du terminal domestique 1 une requête de sélection de contenus audio R2 qui s'affiche sur l'écran du terminal 1 et qui est du type : "sélectionnez : 1) un ou plusieurs contenus audio, 2) la date et l'heure de la restitution de contenus, 3) le mode de restitution ".

Au cours d'une étape E6, l'utilisateur du terminal 1 :
- 1) sélectionne dans un menu qui s'affiche à l'écran le ou les contenus audio qu'il souhaite écouter, par exemple la météo suivie de la chronique économique, toutes deux datées du 5 janvier 2008,
- 2) saisit la date de restitution, par exemple le 05/01/08, puis l'heure de restitution, par exemple 08h00,
- 3) sélectionne, dans un menu qui s'affiche à l'écran, le mode de restitution qu'il souhaite, par exemple "en boucle",
puis renvoie à la plate-forme 5, en réponse à la requête R2, un message contenant les informations précitées.

Au cours d'une étape E7, l'interface Internet 53 de la plateforme 5 transmet le message reçu au module applicatif 56.

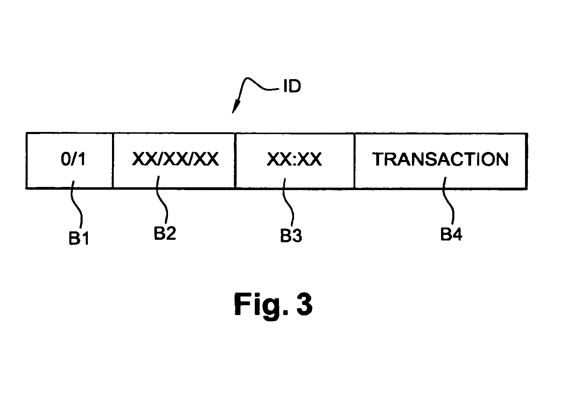

Au cours d'une étape E8, le module applicatif 56 déclenche la génération d'un identifiant unique ID dont l'architecture est représentée à la figure 3.

L'identifiant ID comprend quatre blocs B1, B2, B3 et B4.

Le bloc B1 contient l'information sur le mode de restitution de contenus audio sélectionné par l'utilisateur au cours de l'étape E6 précitée.

Dans l'exemple représenté, le bloc B1 contient 1 bit qui est égal à :
- 0 dans le cas où l'utilisateur a sélectionné le mode "restitution unique du ou des contenus" à l'étape E6,
- 1 dans le cas où l'utilisateur a sélectionné le mode "restitution en boucle" comme c'est le cas dans l'étape E6 précitée.

Le bloc B2 contient quant à lui l'information sur la date de restitution du ou des contenus audio qui a été saisie par l'utilisateur à l'étape E6. Dans l'exemple représenté, la date est codée sur 8 caractères, les deux caractères "/" étant statiques.

Le bloc B3 contient quant à lui l'information sur l'heure de restitution du ou des contenus audio qui a été saisie par l'utilisateur à l'étape E6. Dans l'exemple représenté, la date est codée sur 5 caractères, le caractère ":" étant statique.

Enfin, le bloc B4 contient les informations de transaction. Plus précisément, de telles informations renferment des données d'authentification relatives à l'utilisateur et des données relatives à la commande des contenus audio. De telles données sont cryptées au préalable par un module applicatif dédié (non représenté) qui est installé dans la plateforme 5.

Au cours d'une étape E9 l'interface Internet 53 de la plateforme 5 envoie à l'utilisateur du terminal domestique 1 un message ACK d'accusé de réception qui valide la sélection effectuée à l'étape E6. Le message ACK contient l'identifiant ID qui a été généré à l'étape E8.

Au cours d'une étape E10, l'identifiant ID est mémorisé dans la base de données BD1 du terminal domestique 1.

Au cours d'une étape E11, le module applicatif 14 extrait de la base de données BD1 l'identifiant ID, déchiffre les blocs B1 à B3, puis transmet l'identifiant ID déchiffré à l'interface utilisateur 11. Au cours de cette étape, le module applicatif 14 envoie par ailleurs une commande à l'horloge 15 de façon à ce que cette dernière se déclenche à la date et à l'heure qui sont contenues dans l'ID reçu.

Au cours d'une étape E12, les paramètres associés à l'ID reçu sont affichés sur l'écran du terminal domestique 1. En particulier, l'utilisateur a la possibilité de visualiser la date et l'heure de la restitution des contenus audio sélectionnés à l'étape E6, l'intitulé de ces contenus et le mode de restitution, à savoir "en boucle".

L'utilisateur a bien sûr la possibilité de modifier ces paramètres.

Lorsque l'horloge 15 se déclenche, le navigateur Web 10 envoie, au cours d'une étape E13, un message au serveur de streaming 4, ledit message contenant l'identifiant ID mémorisé à l'étape E10.

Au cours d'une étape E14, suite à la réception dudit message, le processeur 40 commande l'interface Internet 43 de façon à ce qu'elle envoie en direction de la plateforme 5 une requête R_{ID} d'authentification de l'utilisateur qui contient l'identifiant ID.

Au cours d'une étape E15, le processeur 50 vérifie dans la mémoire 52 que l'identifiant ID contenu dans la requête d'authentification précitée a bien été généré, puis commande l'Interface Internet 53 de façon à ce que cette dernière envoie au serveur 4, en réponse à cette requête, un message d'acquittement qui contient la liste des contenus audio à restituer qui est associée à l'identifiant ID.

Au cours d'une étape E16, le processeur 40 commande l'interface Internet 43 de façon à ce que cette dernière transmette au terminal domestique 1 une requête de streaming qui contient l'adresse et le port, dans la base de données BD4, qui sont chacun associés, d'une part, à la météo du 5 janvier 2008, et, d'autre part, à la chronique économique du 5 janvier 2008. Au cours de cette étape, le processeur 40 commande le déclenchement de l'horloge 44.

Au cours d'une étape E17, la restitution des contenus audio est effectuée dans le terminal domestique 1. Cette étape se poursuit tant qu'une durée ΔT, qui a été paramétrée dans l'horloge 44 de façon à permettre la restitution en boucle des deux contenus audio précités, ne s'est pas écoulée. Une fois ladite durée écoulée, la restitution des contenus audio est stoppée.

Selon une variante de l'invention, la restitution des contenus audio peut être également stoppée lorsque l'utilisateur le demande depuis l'interface 11 de son terminal 1.

Au cours d'une étape 18, une fois la restitution de contenus terminée, le module applicatif 14 du terminal domestique 1 envoie une requête à la base de données BD1 de ce dernier, ladite requête contenant l'identifiant ID associé aux deux contenus audio restitués à l'étape E17.

Au cours d'une étape E19, cet identifiant est effacé de la base de données BD1.

Au cours d'une étape 20, le module applicatif 14 transmet l'information d'effacement à l'interface utilisateur 11 pour sa mise à jour.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Ainsi par exemple, lorsque le terminal domestique 1 ne comprend pas de navigateur, la sélection des contenus audio peut être effectuée au moyen d'un ordinateur au terminal 1 via par exemple d'une liaison radio, notamment de type WiFi. Dans ce cas, l'ordinateur comprend également la base de données BD1 contenant les identifiants associés au ou aux contenus sélectionnés par l'utilisateur, ainsi que la description correspondante du ou de ces contenus.

Par ailleurs, selon une autre modalité d'exécution, la restitution des contenus audio peut également être effectuée quasiment immédiatement après la sélection des contenus par l'utilisateur. Il suffit pour cela que ce dernier paramètre l'horloge 15 de son terminal pour que cette dernière se déclenche aussitôt après réception de l'identifiant ID.

Enfin, les échanges ayant lieu au cours des étapes E1 à E4 pour authentifier l'utilisateur pourraient être remplacés par des échanges d'informations ayant lieu uniquement dans le réseau. Autrement dit, l'authentification de l'utilisateur pourrait être implicite, comme c'est le cas des mécanismes reposant sur l'authentification forte.

## Revendications

1. Procédé de restitution de contenu sur un terminal domestique, ledit procédé comportant :
- a) une étape (E6) de sélection d'au moins un contenu sur une plateforme (5), ledit contenu étant stocké sur un serveur distant,
ledit procédé étant **caractérisé en ce qu'**il comporte à la suite de ladite étape de sélection :
• au niveau de la plateforme (5):
- b) une étape (E8) de génération d'un identifiant associé au contenu sélectionné,
- c) une étape (E9) de transmission dudit identifiant généré au terminal,
- d) une étape (E10) de mémorisation dudit identifiant transmis dans ledit terminal,
- e) une étape (E13) de transmission, du terminal vers le serveur distant, à un instant prédéterminé contenu dans ledit identifiant mémorisé, d'un message contenant ledit identifiant mémorisé,
- f) une étape (E14-E15) de récupération dans ledit serveur distant du contenu associé audit identifiant mémorisé,
- g) une étape (E16) de transmission du contenu récupéré, du serveur distant vers le terminal,
- h) une étape (E17) de restitution dans le terminal dudit contenu récupéré transmis.

2. Procédé selon la revendication 1, dans lequel ladite étape de sélection comprend le choix dudit instant prédéterminé.

3. Procédé selon la revendication 1 ou la revendication 2, dans lequel ladite étape de sélection comprend la détermination d'un mode de restitution dudit contenu sélectionné.

4. Procédé selon l'une quelconque des revendications 1 à 3, comprenant à la suite de l'étape de restitution (E17), une étape d'effacement de l'identifiant associé audit contenu restitué.

5. Terminal domestique comprenant des moyens (11) de restitution de contenu préalablement sélectionné sur une plateforme (5), ledit contenu étant stocké sur un serveur distant, ledit terminal étant **caractérisé en ce qu'**il comprend:
- des moyens (BD1) de mémorisation pour mémoriser un identifiant qui est reçu en provenance de ladite plateforme (5) et qui est associé audit contenu préalablement sélectionné,
- des moyens (10) de transmission pour transmettre audit serveur distant, à un instant prédéterminé contenu dans ledit identifiant mémorisé, un message contenant ledit identifiant mémorisé,
- des moyens (10) de réception pour recevoir, en provenance dudit serveur distant, ledit contenu préalablement sélectionné, associé audit identifiant mémorisé.

6. Terminal selon la revendication 5, comprenant en outre des moyens (14) d'effacement dudit identifiant associé au contenu transmis, une fois que ledit contenu a été restitué.

7. Plateforme (5) comprend des moyens de sélection d'au moins un contenu, **caractérisé en ce qu'**elle comprend
- a) des moyens de génération d'un identifiant associé à un contenu sélectionné, ledit identifiant incluant un instant prédéterminé,
- b) des moyens de transmission dudit identifiant généré à un terminal.

8. Programme d'ordinateur comportant des instructions pour l'exécution des étapes du procédé de restitution selon l'une quelconque des revendications 1 à 4, lorsque ledit programme est exécuté par un ordinateur.

9. Support d'enregistrement lisible par un ordinateur sur lequel est enregistré un programme d'ordinateur comprenant des instructions pour l'exécution des étapes du procédé de restitution selon l'une quelconque des revendications 1 à 4, lorsque ledit programme est exécuté par un ordinateur.

## Patentansprüche

1. Verfahren zur Wiederherstellung von Daten auf einem Heimendgerät, wobei das Verfahren Folgendes aufweist:
- a) einen Schritt (E6) zur Auswahl von mindestens einem Datenelement auf einer Plattform (5), wobei die Daten auf einem entfernten Server gespeichert sind, wobei das Verfahren **dadurch gekennzeichnet ist, dass** es nach dem Schritt zur Auswahl Folgendes aufweist:
• auf Plattformebene (5):
- b) einen Schritt (E8) zum Erzeugen einer Kennung, die dem ausgewählten Datenelement zugehörig ist,
- c) einen Schritt (E9) zum Senden der erzeugten Kennung an das Endgerät,
- d) einen Schritt (E10) zur Speicherung der gesendeten Kennung in dem Endgerät,
- e) einen Schritt (E13) zum Senden einer Nachricht, die die gespeicherte Kennung enthält, an einem in der gespeicherten Kennung enthaltenen vorbestimmten Zeitpunkt vom Endgerät zum entfernten Server,
- f) einen Schritt (E14 bis E15) zur Wiedergewinnung der der gespeicherten Kennung zugehörigen Daten in dem entfernten Server,
- g) einen Schritt (E16) zum Senden der wiedergewonnenen Daten vom entfernten Server an das Endgerät,
- h) einen Schritt (E17) zur Wiederherstellung der gesendeten wiedergewonnenen Daten in dem Endgerät.

2. Verfahren nach Anspruch 1, wobei der Auswahlschritt die Wahl des vorbestimmten Zeitpunkts aufweist.

3. Verfahren nach Anspruch 1 oder Anspruch 2, wobei der Auswahlschritt die Bestimmung einer Art der Wiederherstellung der ausgewählten Daten aufweist.

4. Verfahren nach einem der Ansprüche 1 bis 3, das nach dem Wiederherstellungsschritt (E17) einen Schritt zum Löschen der den wiederhergestellten Daten zugehörigen Kennung aufweist.

5. Heimendgerät, das Mittel (11) zur Wiederherstellung von im Voraus auf einer Plattform (5) ausgewählten Daten aufweist, wobei die Daten auf einem entfernten Server gespeichert sind, wobei das Endgerät **dadurch gekennzeichnet ist, dass** es Folgendes aufweist:
- Speichermittel (BD1) zum Speichern einer Kennung, die von der Plattform (5) kommend empfangen wird und die den im Voraus ausgewählten Daten zugehörig ist,
- Sendemittel (10) zum Senden einer Nachricht, die die gespeicherte Kennung enthält, an einem in der gespeicherten Kennung enthaltenen vorbestimmten Zeitpunkt an den entfernten Server,
- Empfangsmittel (10) zum Empfangen der im Voraus ausgewählten, von dem entfernten Server kommenden Daten, die der gespeicherten Kennung zugehörig sind.

6. Endgerät nach Anspruch 5, das ferner Mittel (14) zum Löschen der den gesendeten Daten zugehörigen Kennung aufweist, sobald der Inhalt wiederhergestellt wurde.

7. Plattform (5), die Mittel zur Auswahl von mindestens einem Datenelement aufweist, **dadurch gekennzeichnet, dass** sie Folgendes aufweist:
- a) Mittel zur Erzeugung einer Kennung, die einem ausgewählten Datenelement zugehörig ist, wobei die Kennung einen vorbestimmten Zeitpunkt enthält,
- b) Mittel zum Senden der erzeugten Kennung an ein Endgerät.

8. Computerprogramm, das Befehle für die Ausführung der Schritte des Wiederherstellungsverfahrens nach einem der Ansprüche 1 bis 4 aufweist, wenn das Programm durch einen Computer ausgeführt wird.

9. Maschinenlesbarer Datenträger, auf dem ein Computerprogramm gespeichert ist, das Befehle für die Ausführung der Schritte des Wiederherstellungsverfahrens nach einem der Ansprüche 1 bis 4 aufweist, wenn das Programm durch einen Computer ausgeführt wird.

## Claims

1. Method of restoral of content on a domestic terminal, said method comprising:
- a) a step (E6) of selection of at least one content on a platform (5), said content being stored on a remote server,
said method being **characterized in that** it comprises, subsequent to said step of selection:
• at the level of the platform (5):
- b) a step (E8) of generating an identifier associated with the selected content,
- c) a step (E9) of transmitting said generated identifier to the terminal,
- d) a step (E10) of storing said transmitted identifier in said terminal,
- e) a step (E13) of transmitting, from the terminal to the remote server, at a predetermined instant contained in said stored identifier, a message containing said stored identifier,
- f) a step (E14-E15) of retrieving in said remote server the content associated with said stored identifier,
- g) a step (E16) of transmitting the retrieved content, from the remote server to the terminal,
- h) a step (E17) of restoring in the terminal said transmitted retrieved content.

2. Method according to Claim 1, in which said selection step comprises the choosing of said predetermined instant.

3. Method according to Claim 1 or Claim 2, in which said selection step comprises the determination of a mode of restoral of said selected content.

4. Method according to any one of Claims 1 to 3, comprising subsequent to the restoral step (E17), a step of erasing the identifier associated with said content restored.

5. Domestic terminal comprising means (11) of restoral of content previously selected on a platform (5), said content being stored on a remote server, said terminal being **characterized in that** it comprises:
- storage means (BD1) for storing an identifier which is received from said platform (5) and which is associated with said content previously selected,
- transmission means (10) for transmitting to said remote server, at a predetermined instant contained in said stored identifier, a message containing said stored identifier,
- reception means (10) for receiving, from said remote server, said content previously selected, associated with said stored identifier.

6. Terminal according to Claim 5, furthermore comprising erasure means (14) for erasing said identifier associated with the content transmitted, once said content has been restored.

7. Platform (5) comprises means for selecting at least one content, **characterized in that** it comprises
- a) means for generating an identifier associated with a selected content, said identifier including a predetermined instant,
- b) means for transmitting said generated identifier to a terminal.

8. Computer program comprising instructions for the execution of the steps of the method of restoral according to any one of Claims 1 to 4, when said program is executed by a computer.

9. Recording medium readable by a computer on which is recorded a computer program comprising instructions for the execution of the steps of the method of restoral according to any one of Claims 1 to 4, when said program is executed by a computer.
